# EUROPEAN PATENT APPLICATION

(11) **EP 4 575 313 A1**
(43) Date of publication of application: **25.06.2025**
(21) Application number: 23855090.9
(22) Date of filing: 07.08.2023
(51) Int. Cl.: F23G 5/027, F23G 5/44, F23J 11/00, F23J 1/06, F23M 5/00, C10G 1/10, C10G 1/00, F23G 5/46

(54) **DEVICE AND SYSTEM FOR PYROLYSIS OF WASTE**

(30) Priority: 18.08.2022 KR 20220103376; 18.08.2022 KR 20220103384
(71) Applicant: Hanwha Momentum Co., Ltd., Bundang-gu Seongnam-si, Gyeonggi-do 13494 (KR)
(72) Inventor: YU, Jang Ho, Seongnam-si, Gyeonggi-do 13494 (KR); LEE, Hyung Suk, Seongnam-si, Gyeonggi-do 13494 (KR); KIM, Do Hyung, Seongnam-si, Gyeonggi-do 13494 (KR); KANG, Ho Jung, Seongnam-si, Gyeonggi-do 13494 (KR); JEONG, Ju Ho, Seongnam-si, Gyeonggi-do 13494 (KR)
(74) Representative: Gulde & Partner
(86) International application number: PCT/KR2023/011540
(87) International publication number: WO 2024/039123

(57) **Abstract**

This system for pyrolysis of waste comprises: a pyrolysis device into which waste is fed and which pyrolyzes the fed waste to produce combustible gas; an emulsification device that is connected to the pyrolysis device, and cools condensable gas in the combustible gas produced by the pyrolysis device to produce pyrolysis oil and discharges non-condensable gas; and a combustion furnace which is connected to the emulsification device and which receives and combusts the non-condensable gas discharged from the emulsification device, wherein the pyrolysis device pyrolyzes by heating the waste with hot air provided from the combustion furnace.

## Description

### [TECHNICAL FIELD]

The present invention relates to a pyrolysis system for waste, and more particularly, to a pyrolysis system for waste that decomposes waste by receiving hot air.

### [BACKGROUND ART]

Recently, with the development of industries, the production of goods using plastic and other materials has increased significantly. Consequently, a large amount of waste, such as waste plastics, is generated, and various methods for efficiently handling this waste have been proposed.

Among the methods commonly used for handling such waste are those that minimize the volume of the waste for landfill or incineration, or dispose of it in the ocean. However, the methods of landfill and ocean disposal have several problems, such as secondary pollution from leachate, the limitation of landfill sites, marine pollution, and the prohibition of ocean dumping.

Furthermore, there is a method of handling waste by pyrolysis. In the case of pyrolyzing waste, fuel is required, and the non-condensable gas discharged from an emulsification apparatus is released as exhaust gas after passing through a boiler post-combustion. This makes the reuse of the non-condensable gas impossible, resulting in resource wastage and reduced efficiency of a pyrolysis system.

### [DISCLOSURE]

### [Technical Problems]

The present invention aims to provide a pyrolysis apparatus and system for waste that improve efficiency by receiving hot air to decompose waste.

Additionally, the present invention also aims to provide a pyrolysis apparatus and system for waste with improved efficiency, wherein a combustion furnace generates hot air using the non-condensable gas discharged from an emulsification apparatus and supplies it to the pyrolysis apparatus.

However, aspects of the present invention are not restricted to those set forth herein. The above and other aspects will become more apparent to one of ordinary skill in the art to which the disclosure pertains by referencing the detailed description of the present invention given below.

### [Technical Solutions]

According to an aspect of the present disclosure, a pyrolysis apparatus for waste, includes: a pyrolysis chamber that provides a sealed internal space and in which introduced waste is layered; a pyrolysis member provided on a lower side of the pyrolysis chamber and contacting a lower part of the layered waste to pyrolyze the waste; an exhaust pipe provided on one side of the pyrolysis chamber to discharge combustible gas generated during the pyrolysis of the waste; and a residue discharge section provided on a lower side of the pyrolysis member to discharge residues remaining after the pyrolysis of the waste, wherein the pyrolysis member is heated by hot air supplied from the outside, melting and pyrolyzing the waste that comes in contact with the pyrolysis member.

The pyrolysis member includes: a frame part formed to block a lower part of the internal space of the pyrolysis chamber, on which the waste is layered; and discharge holes formed in the frame part so that the residues generated during the pyrolysis of the waste accumulate on the lower side of the pyrolysis member.

The frame part is formed in a hollow shape to allow the hot air to be introduced and circulated inside.

Further, the frame part includes: a pair of distribution pipes formed in an arc shape to closely adhere to an inner side of the pyrolysis chamber and disposed to face each other, and having connected thereto an inlet pipe for introducing the hot air and an outlet pipe for discharging the hot air; and a plurality of connecting pipes connecting the pair of distribution pipes, spaced apart from each other, and forming the discharge holes.

In addition, the pyrolysis chamber includes a hot air supply pipe that branches off from the outlet pipe, is connected to the internal space, discharges the hot air from the outlet pipe into the internal space, and directly supplies the hot air to the waste, and the hot air circulating through the pyrolysis member is discharged to the main boiler or discharged into the internal space through the hot air supply pipe.

Meanwhile, the pyrolysis apparatus further includes: first heating means provided in the pyrolysis member and supplying hot air to the pyrolysis member to provide heat to the pyrolysis member so that the pyrolysis member maintains a preset first reference temperature; and second heating means provided to surround the pyrolysis chamber and transferring heat to the internal space for the internal space to maintain a temperature lower than the first reference temperature when hot air is supplied inside and a temperature rises.

Further, the pyrolysis chamber includes a jacket portion that is formed to surround the exterior, with a sealed gas circulation space provided between the jacket portion and the exterior.

In addition, at the preset first reference temperature, the hot air is supplied to the pyrolysis member, and at a temperature higher or lower than the first reference temperature, the hot air is supplied to the jacket portion.

Further, the jacket portion is formed of a refractory material or includes a refractory member formed of a refractory material on its inner surface.

Meanwhile, the pyrolysis member is installed at a predetermined distance from a bottom of the pyrolysis chamber.

Further, the residue discharge section includes: a lower door installed at the bottom of the pyrolysis chamber to selectively open or seal the internal space; and a scraper that adheres magnetically to a magnet provided on an outer side of the bottom of the pyrolysis chamber, and rotates around a rotation axis according to the magnet when the lower door is opened, scraping the residues deposited at the bottom of the pyrolysis chamber.

The residue discharge section includes a hopper attached to the bottom of the pyrolysis chamber to receive the residues discharged through the lower door, and having hot air supplied inside to transfer heat to the pyrolysis member when a temperature rises.

According to another aspect of the present disclosure, a pyrolysis system for waste, includes: a pyrolysis apparatus receiving waste and generating combustible gas by pyrolyzing the received waste; an emulsification apparatus connected to the pyrolysis apparatus, producing pyrolysis oil by cooling condensable gas among the combustible gas generated in the pyrolysis apparatus, and discharging non-condensable gas; and a combustion furnace connected to the emulsification apparatus and receiving and combusting the non-condensable gas discharged from the emulsification apparatus, wherein the pyrolysis apparatus is capable of pyrolyzing waste, using the hot air provided from the combustion furnace.

Here, the combustion furnace generates hot air using combustion heat generated by combusting the non-condensable gas and supplies the hot air to the pyrolysis apparatus.

Further, during an initial operation, the combustion furnace generates the hot air using a supplied fuel, and when the non-condensable gas is discharged from the emulsification apparatus, the combustion furnace generates the hot air by combusting the non-condensable gas.

In addition, the pyrolysis system of claim further includes: a main boiler generating steam by recovering the hot air discharged from the pyrolysis apparatus, or releasing the hot air discharged from the pyrolysis apparatus to a pollution prevention facility; and an auxiliary boiler recovering and cooling the hot air discharged from the combustion furnace or discharged after heating the pyrolysis apparatus, and supplies the hot air to the pyrolysis apparatus.

Accordingly, when a temperature of the hot air discharged from the combustion furnace is below a preset first reference temperature during the initial operation, the hot air discharged from the combustion furnace is supplied to the pyrolysis apparatus, and when the temperature of the hot air discharged from the combustion furnace is higher than the first reference temperature, the hot air discharged from the combustion furnace is supplied to the auxiliary boiler, cooled to the first reference temperature, and then supplied to the pyrolysis apparatus.

Here, when a temperature of the hot air is higher than a preset first reference temperature, the auxiliary boiler recovers the hot air discharged after heating the pyrolysis apparatus, cools the recovered hot air to the first reference temperature, and then re-supplies the cooled hot air to the pyrolysis apparatus.

The hot air includes: a first hot air stream generated and discharged from the combustion furnace and supplied to the pyrolysis apparatus; a second hot air stream generated and discharged from the combustion furnace, cooled in the auxiliary boiler, and then supplied to the pyrolysis apparatus; and a third hot air stream passing through the pyrolysis apparatus, cooled in the auxiliary boiler, and then supplied to the pyrolysis apparatus.

**In** addition, the pyrolysis apparatus includes: a first pathway through which the first through third hot air streams having the preset first reference temperature pass to supply heat for pyrolyzing the waste; and a second pathway through which the first hot air stream having a temperature equal to or higher than a second reference temperature, which is higher than the first reference temperature, passes, and which is for supplying heat to an internal space into which the waste is introduced to maintain the internal space at a third reference temperature, which is lower than the first reference temperature.

Accordingly, the pyrolysis apparatus includes a first damper which operates to close the first pathway even if the temperature of the first through third hot air streams supplied to the first pathway is at the first reference temperature, in a case where the temperature of the first pathway exceeds the first reference temperature.

Further, the pyrolysis apparatus includes a second damper which operates to close the second pathway even if the temperature of the first through third hot air streams supplied to the second pathway is equal to or higher than the second reference temperature, in case where the temperature of the internal space exceeds the third reference temperature.

**In** addition, the pyrolysis apparatus further includes the third pathway positioned adjacent to the first pathway, and the first through third hot air streams pass through the third pathway, providing heat for the first pathway to maintain the first pathway at the first reference temperature.

Further, the pyrolysis apparatus further includes the fourth pathway which connects the outlet side of the first pathway or the third pathway with the internal space **111,** and the fourth pathway supplies the first through third hot air streams that have passed through the first pathway or the third pathway to the internal space.

**In** addition, the first through third hot air streams that have passed through the first pathway or the third pathway is discharged to the main boiler or the internal space, and the first hot air stream that have passed through the second pathway is discharged to the main boiler or the auxiliary boiler.

Meanwhile, the pyrolysis oil generated in the emulsification apparatus passes through the auxiliary boiler for heat exchange, passes through the main boiler for heat exchange, and is discharged to a refining facility.

Accordingly, the hot air passing through the auxiliary boiler exchanges heat with water circulating in the auxiliary boiler or with the pyrolysis oil.

Further, a plurality of pyrolysis apparatuses may be provided between the combustion furnace and the emulsification apparatus.

### [Advantageous Effects]

According to the present invention as described above, a pyrolysis apparatus is supplied with hot air to decompose waste, resulting in improved efficiency of a pyrolysis system.

Furthermore, a combustion furnace generates hot air using the non-condensable gas discharged from an emulsification apparatus and supplies it to the pyrolysis apparatus, thereby achieving improved efficiency.

Additionally, depending on the temperature of the hot air discharged from the combustion furnace, the hot air can be supplied to first through fourth pathways of the pyrolysis apparatus or to an auxiliary boiler.

Moreover, the waste heat generated in both the auxiliary boiler and a main boiler as the pyrolysis oil discharged from the emulsification apparatus passes through the auxiliary boiler and the main boiler can be utilized.

The effects of the present invention are not limited to the above-described effects and other effects which are not described herein will become apparent to those skilled in the art from the following description and claims.

### [BRIEF DESCRIPTION OF DRAWINGS]

FIG. 1 illustrates a pyrolysis system for waste according to an embodiment of the present invention.
FIG. 2 is a simplified diagram of a pyrolysis system for waste according to an embodiment of the present invention.
FIGS. 3 and 4 are simplified diagrams of pyrolysis systems for waste according to other embodiments of the present invention.
FIG. 5 is a diagram for explaining a method of supplying hot air to a pyrolysis apparatus in a pyrolysis system for waste according to another embodiment of the present invention.
FIG. 6 illustrates a pyrolysis apparatus according to an embodiment of the present invention.
FIG. 7 illustrates a pyrolysis member according to an embodiment of the present invention.

### [MODES FOR IMPLEMENTING THE INVENTION]

Hereinafter, exemplary embodiments of the present disclosure will be described in detail with reference to the accompanying drawings. Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. The exemplary embodiments are provided for making the disclosure of the inventive concept thorough and for fully conveying the scope of the inventive concept to those skilled in the art. It is to be noted that the scope of the disclosure is defined only by the claims. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

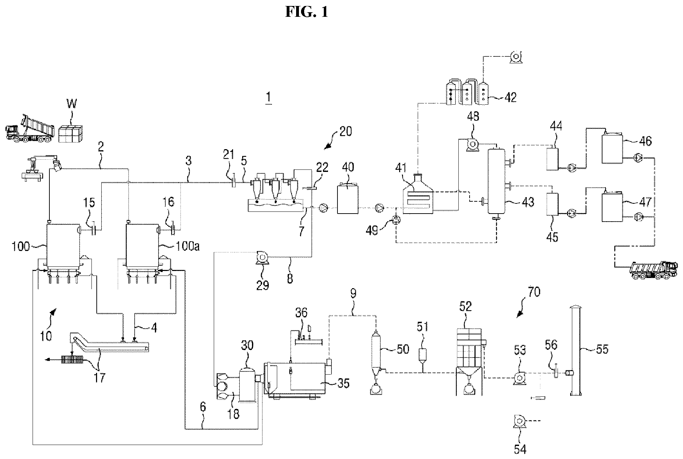

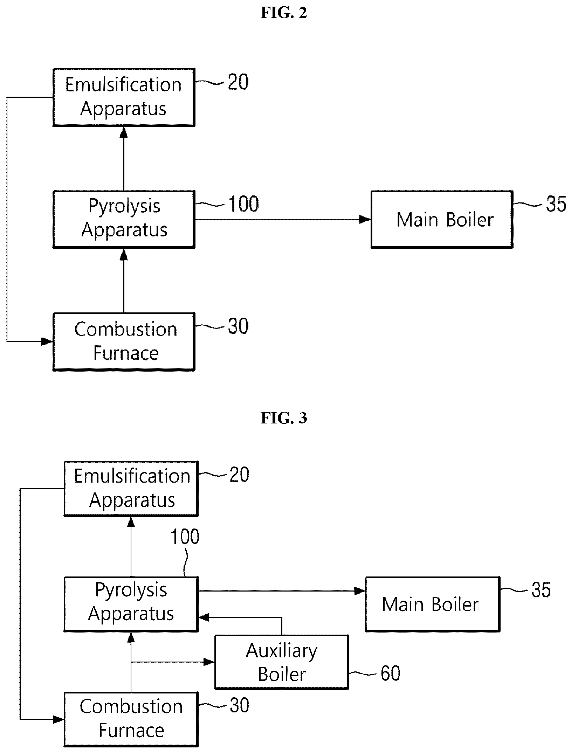

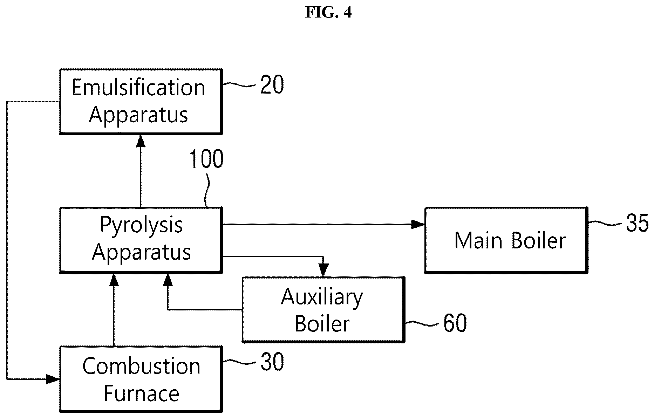

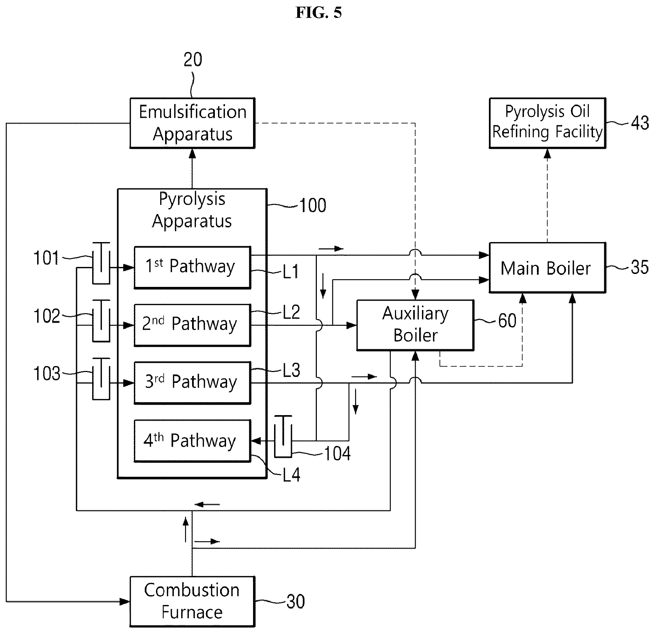

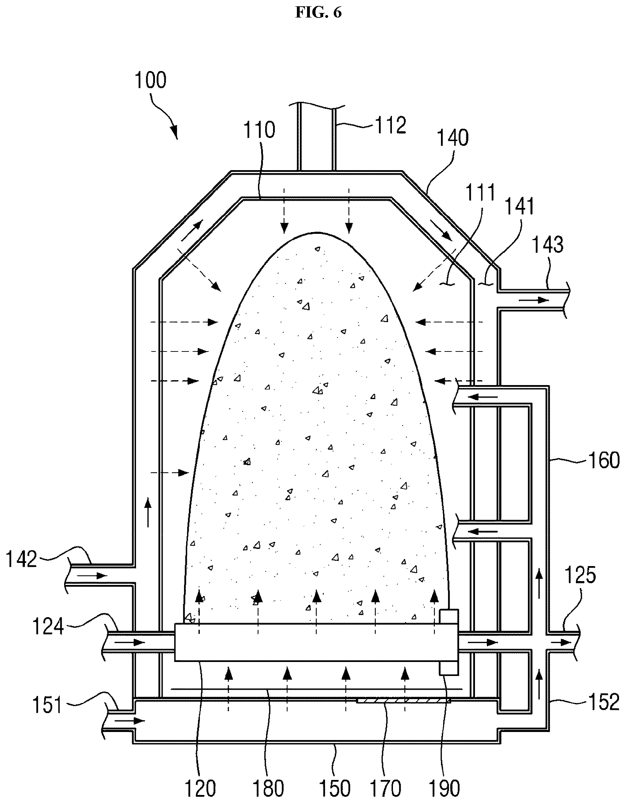

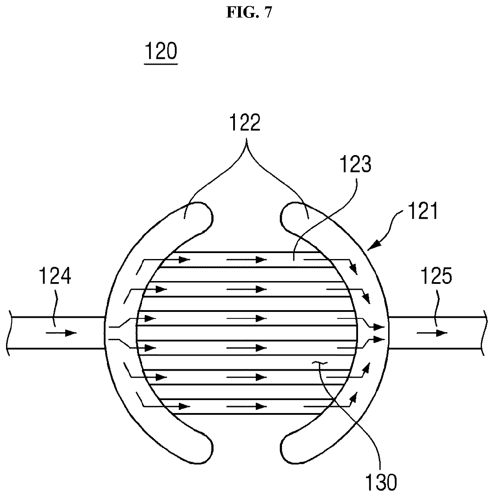

FIG. 1 illustrates a pyrolysis system for waste according to an embodiment of the present invention; FIG. 2 is a simplified diagram of a pyrolysis system for waste according to an embodiment of the present invention; FIGS. 3 and 4 are simplified diagrams of pyrolysis systems for waste according to other embodiments of the present invention; FIG. 5 is a diagram for explaining a method of supplying hot air to a pyrolysis apparatus in a pyrolysis system for waste according to another embodiment of the present invention; FIG. 6 illustrates a pyrolysis apparatus according to an embodiment of the present invention; and FIG. 7 illustrates a pyrolysis member according to an embodiment of the present invention.

Referring to FIG. 1, a pyrolysis system 1 for waste according to the present invention includes various devices. Here, FIG. 1 illustrates an exemplary pyrolysis system 1 for waste of the present invention, and new devices may be added or the depicted devices may be omitted.

The pyrolysis system 1 may include a pyrolysis unit 10, an emulsification apparatus 20, a combustion furnace 30, and a waste heat recovery unit 70. Waste may be introduced into the pyrolysis unit 10, where combustible gas may be generated. The pyrolysis unit 10 may include devices for the complete combustion of the generated combustible gas. The emulsification apparatus 20 may receive the combustible gas generated by the pyrolysis unit 10. The emulsification apparatus 20 may include devices that generate pyrolysis oil from condensable gas among the introduced combustible gas. The combustion furnace 30 includes devices that heat the non-condensable gas discharged from the emulsification apparatus 20 to provide hot air to the pyrolysis unit 10. The waste heat recovery unit 70 includes devices that recover waste heat generated when the combustible gas produced by the pyrolysis unit 10 or the non-condensable gas generated by the emulsification apparatus 20 is fully combusted. For convenience, each of these units is approximately distinguished and named, and is merely exemplary.

Waste W pyrolyzed by the pyrolysis system 1 may include waste plastic, solid refuse fuel (SRF), marine debris, waste tires, etc. For example, the pyrolysis system 1 may be understood as a recycling system for waste plastic. The waste W may be brought into an open-storage yard by means of transportation. The waste W may be configured into a size and shape suitable for introduction into the pyrolysis system 1.

The waste W may be introduced into the pyrolysis unit 10 through input means 2. For example, the waste W may be fed into pyrolysis apparatuses 100 and 100a through input means 2 such as an automatic feeder, cargo crane, jib crane, or overhead crane.

The pyrolysis unit 10 may include one or more pyrolysis apparatuses 100 and 100a and a burner 18, where the pyrolysis of the waste W is performed. When multiple pyrolysis apparatuses 100 and 100a are provided, the pyrolysis apparatuses 100 and 100a are connected in parallel to operate independently, allowing for cross-operation. FIG. 1 illustrates two pyrolysis apparatuses, i.e., first and second pyrolysis apparatuses 100 and 100a, but the present invention is not limited thereto. Alternatively, three or a various number of pyrolysis apparatuses may be provided in various shapes and sizes depending on the design.

During the pyrolysis of the waste W in the pyrolysis apparatuses 100 and 100a, combustible gas is generated. The combustible gas moves through a combustible gas transfer line 3, and the residues left after pyrolysis is discharged through residue discharge means 4. The residue discharge means 4 is connected to a waste transport device 17. For example, the waste transport device 17 includes an apron conveyor.

The combustible gas transfer line 3 may be provided as, for example, a gas duct, and may include gas dampers 15 and 16 that may open and close the flow path of the combustible gas. For example, the combustible gas transfer line 3 may include a first gas damper 15 that selectively blocks the flow of combustible gas generated in the first pyrolysis apparatus 100 and a second gas damper 16 that selectively blocks the flow of gas generated in the second pyrolysis apparatus 100a. By controlling the opening and closing of the first and second gas dampers 15 and 16, the combustible gas generated in the first pyrolysis apparatus 100 or the second pyrolysis apparatus 100a flows into the combustible gas transfer line 3.

The combustible gas transfer line 3 may be connected to an emulsification gas supply line 5 and may thereby be connected to the emulsification apparatus 20. The emulsification gas supply line 5 is connected to the emulsification apparatus 20 and supplies combustible gas to the emulsification apparatus 20.

The emulsification gas supply line 5 is provided with a first gas duct 21, which selectively blocks the flow of combustible gas. By controlling the opening and closing of the first gas duct 21, the combustible gas flowing into the combustible gas transfer line 3 may be selectively directed into the emulsification gas supply line 5.

The combustible gas introduced into the emulsification apparatus 20 through the emulsification gas supply line 5 may be cooled in the emulsification apparatus 20, with at least some of it condensing into pyrolysis oil. In other words, in the emulsification apparatus 20, the combustible gas is separated into pyrolysis oil and non-condensable gas that cannot be condensed into pyrolysis oil. The pyrolysis oil may be transported through a pyrolysis oil transfer line 7, and the non-condensable gas may flow into a combustion furnace 30 through a non-condensable gas transfer line 8.

The pyrolysis oil transfer line 7 is connected to an oil storage tank 40. The pyrolysis oil transferred through the pyrolysis oil transfer line 7 may be refined through various processes for use. Devices and processes that will hereinafter be described are exemplary, and the pyrolysis oil generated in the emulsification apparatus 20 may be used in various ways.

The pyrolysis oil transferred through the pyrolysis oil transfer line 7 may be stored in the oil storage tank 40. The pyrolysis oil stored in the oil storage tank 40 is transferred to a refining heater 41 and heated. The refining heater 41 may be supplied with a predetermined fuel, such as oil or gas, or electricity may be applied for heating. Some of the gas discharged from a refining tower 43 may be fed back into the refining heater 41 through a fan 48. The pyrolysis oil refined in the refining heater 41 is transferred to the refining tower 43, and the gas generated during the heating process is transferred to an exhaust gas refining device 42. The gas refined in the exhaust gas refining device 42 may be discharged to the outside.

The pyrolysis oil transferred to the refining tower 43 may be fed back to the refining heater 41 and reheated. The gas-phase refined oil fractionated and discharged in the refining tower 43 maya pass through condensers 44 and 45 and be transferred to refined oil storage tanks 46 and 47. At this time, the condensers 44 and 45 may be provided in multiple numbers to condense different types of refined oil. For example, a first condenser 44 may be operated to produce light oil, and a second condenser 45 may be operated to produce heavy oil. Accordingly, a first refined oil storage tank 46 connected to the first condenser 44 stores light oil, and a second refined oil storage tank 47 connected to the second condenser 45 stores heavy oil. The refined oil stored in the refined oil storage tanks 46 and 47 may be exported for external use as needed.

Various fans 48 or pumps 49 for controlling the flow may be installed in each flow path. The positions and numbers of the fans 48 and pumps 49 are exemplary and may vary depending on the design.

In the non-condensable gas transfer line 8, the non-condensable gas that cannot be condensed into pyrolysis oil in the emulsification apparatus 20 is transferred to a combustion furnace 30. The non-condensable gas transfer line 8 may be provided with a second gas duct 22 for controlling the opening and closing of a transfer path and may be equipped with a fan 29 for transferring the non-condensable gas. The second gas duct 22 and the fan 29 assist in the flow of gas and may be omitted as needed, with their positions and numbers not being limited.

The waste heat recovery unit 70 includes the combustion furnace 30, which is connected to a burner furnace 18, and a main boiler 35, which recovers the waste heat generated during a combustion process of the burner furnace 18 into process water to produce steam. The steam generated in the main boiler 35 may be transferred to a steam distributor 36 for use. After waste heat recovery in the main boiler 35, combustion gas is discharged through a combustion gas transfer line 9.

The combustion gas transferred through the combustion gas transfer line 9 may pass through pollution prevention facilities for removing pollutants before being discharged. For example, the combustion gas transfer line 9 may be connected to a semi-dry reaction tower 50. The combustion gas is introduced into the semi-dry reaction tower 50, where it reacts with slaked lime slurry. The combustion gas is then transferred to a bag filter 52, where powdered slaked lime and activated carbon stored in a tank 51 are injected, forming a ton bag. The ton bag formed in the semi-dry reaction tower 50 and/or bag filter 52 may be moved for separate treatment. The treated combustion gas is discharged as exhaust gas through a stack 55. To this end, a fan 53 and duct 56 may be appropriately provided upstream of the stack 55. **In** this embodiment, the semi-dry reaction tower, bag filter, and stack are presented as exemplary prevention facilities, but the concept of the present invention is not limited thereto. For example, additional prevention facilities, such as scrubbers, selective catalytic reduction devices (SCR), selective non-catalytic reduction devices (SNCR), and cyclones, may also be provided.

**In** the combustion furnace 30, the non-condensable gas that cannot be condensed into pyrolysis oil in the emulsification apparatus 20 is combusted through the non-condensable gas transfer line 8, and hot air is generated by the combustion heat. As the combustion reaction continues, the temperature of the hot air may gradually increase. This hot air may be transferred to the pyrolysis apparatuses 100 and 100a through a hot air supply line 6.

**In** this manner, the combustion heat from the combustion furnace 30 may be used to supply hot air to the pyrolysis apparatuses 100 and 100a, providing necessary heat for the pyrolysis of the waste W. By recycling the combustion heat generated in the combustion furnace 30 in the pyrolysis apparatuses 100 and 100a, it is possible to save the heat sources that are separately provided for the pyrolysis of the waste W in the pyrolysis apparatuses 100 and 100a.

A pyrolysis system for the waste W, including the pyrolysis apparatus 100 that uses the combustion heat from the combustion furnace 30, will hereinafter be described with reference to FIG. 2.

The pyrolysis apparatus 100 receives hot air discharged from the combustion furnace 30, heats the waste W with the hot air for pyrolysis, and generates combustible gas during the pyrolysis. The hot air that has circulated through the pyrolysis apparatus 100 may be discharged to the main boiler 35.

At this time, the pyrolysis apparatus 100 may be equipped with the pyrolysis member 120, which is heated when the hot air is supplied, causing its temperature to rise. The waste W comes into contact with the heated pyrolysis member 120, melts, and undergoes pyrolysis. The pyrolysis member 120 will be described later in further detail.

The main boiler 35 recovers the hot air discharged after circulating through the pyrolysis apparatus 100 and discharges it to the steam distributor 36 to generate steam, or discharges it to a pollution prevention facility including the semi-dry reaction tower 50 and the bag filter 52 through the combustion gas transfer line 9.

The emulsification apparatus 20 is connected to the pyrolysis apparatus 100, receiving the combustible gas generated by the pyrolysis apparatus 100 through the combustible gas transfer line 3. The emulsification apparatus 20 cools the condensable gas among the supplied combustible gas to produce pyrolysis oil, while the non-condensable gas that cannot be condensed into pyrolysis oil is discharged through the non-condensable gas transfer line 8.

The combustion furnace 30 may combust the supplied non-condensable gas to generate hot air, which may then be supplied to the pyrolysis apparatus 100, utilizing the combustion heat. If multiple pyrolysis apparatuses 100 are provided between the combustion furnace 30 and the emulsification apparatus 20, dampers are installed in the hot air supply line 6 connected to each pyrolysis apparatus 100, allowing control of the hot air supply by adjusting each damper.

During an initial operation, the combustion furnace 30 requires an additional fuel supply because no combustible gas is discharged from the pyrolysis apparatus 100. The combustion furnace 30 generates hot air using the supplied fuel. As the operation of the pyrolysis apparatus 100 progresses and non-condensable gas is supplied, the combustion furnace 30 may generate hot air using the supplied non-condensable gas.

In this process, maintaining the optimal temperature environment for pyrolysis in the pyrolysis apparatus 100 is important, but the temperature of the hot air discharged from the combustion furnace 30 may be higher or lower than the optimal pyrolysis temperature. Particularly, as non-condensable gas is supplied to the combustion furnace 30, the temperature of the hot air may rise sharply. If the temperature of the hot air discharged from the combustion furnace 30 exceeds the optimal pyrolysis temperature, the hot air is cooled to the optimal pyrolysis temperature by an auxiliary boiler 60 before being supplied to the pyrolysis apparatus 100.

Referring to FIG. 3, the auxiliary boiler 60 is installed between the combustion furnace 30 and the pyrolysis apparatus 100. The auxiliary boiler 60 receives part of the hot air discharged from the combustion furnace 30, cools the hot air, and then supplies it to the pyrolysis apparatus 100.

According to this type of hot air control method, during the initial operation, the combustion furnace 30 generates hot air using fuel. If the temperature of the hot air discharged from the combustion furnace 30 is below a predetermined first reference temperature, the hot air may be supplied directly to the pyrolysis apparatus 100.

When pyrolysis occurs in the pyrolysis apparatus 100, the combustible gas is cooled in the emulsification apparatus 20, and non-condensable gas is discharged. As non-condensable gas is supplied to the combustion furnace 30, the temperature of the generated hot air rises sharply. If the temperature of the hot air discharged from the combustion furnace 30 exceeds the first reference temperature, the combustion furnace 30 may discharge the hot air to the auxiliary boiler 60.

The auxiliary boiler 60 cools the hot air, which is above the first reference temperature, down to the first reference temperature before supplying it to the pyrolysis apparatus 100.

At this time, the predetermined first reference temperature may be, for example, between 400°C and 500°C, representing the optimal pyrolysis temperature. The purpose of supplying hot air at the first reference temperature is to heat the pyrolysis member 120 to the first reference temperature, as will be described later. If the pyrolysis member 120 is below the first reference temperature, pyrolysis of the waste W does not occur. If the pyrolysis member 120 is above the first reference temperature, unnecessary combustion occurs, and optimal pyrolysis is not achieved. Therefore, it is preferable to supply hot air at the first reference temperature to heat the pyrolysis member 120 to the first reference temperature.

Referring to FIG. 4, the auxiliary boiler 60 may recover the hot air discharged after heating the pyrolysis apparatus 100, cool the recovered hot air, and then re-supply the cooled hot air to the pyrolysis apparatus 100.

That is, the hot air at the first reference temperature and the hot air above the first reference temperature generated in the combustion furnace 30 are supplied to the pyrolysis apparatus 100. The hot air above the first reference temperature is recovered by the auxiliary boiler 60 after heating the pyrolysis apparatus 100, cooled to the first reference temperature, and then re-supplied to the pyrolysis apparatus 100. More precisely, the hot air above the first reference temperature does not pass through the part of the pyrolysis apparatus 100 where pyrolysis occurs but instead passes around the periphery of an internal space 111 where the waste W is loaded, maintaining the temperature of the internal space 111 at an appropriate level.

Accordingly, the hot air supplied to the pyrolysis apparatus 100 may include a first hot air stream that is generated and discharged from the combustion furnace 30 and is supplied to the pyrolysis apparatus 100, a second hot air stream that is generated and discharged from the combustion furnace 30, is cooled in the auxiliary boiler 60, and is then supplied to the pyrolysis apparatus 100, and a third hot air stream that passes through the pyrolysis apparatus 100, is cooled in the auxiliary boiler 60, and is then re-supplied to the pyrolysis apparatus 100.

The first through third hot air streams supplied to the pyrolysis apparatus 100 may be used for different purposes according to their temperature, and the pyrolysis apparatus 100 may be provided with multiple pathways to use the hot air streams according to their intended purposes.

Referring to FIG. 5, the pyrolysis apparatus 100 is provided with first through fourth pathways L1 through L4, and the entrances of the first through fourth pathways L1 through L4 may be equipped with first through fourth dampers, respectively, to open and close the first through fourth pathways L1 through L4.

The first pathway L1 is provided inside the pyrolysis apparatus 100, allowing the first through third hot air streams, which have the first reference temperature, to pass through and supply heat for the pyrolysis of the waste W. In other words, the first through third hot air streams passing through the first pathway L1 supply heat to the pyrolysis member 120 that forms the first pathway L1, causing the pyrolysis member 120 to reach the first reference temperature. The pyrolysis member 120 is heated, melting and pyrolyzing the waste W that comes into contact with it.

In this manner, the first through third hot air streams passing through the first pathway L1 indirectly supply heat to the waste W.

The inlet side of the first pathway L1 is connected to the combustion furnace 30 or the auxiliary boiler 60, where the first through third hot air streams are supplied. As the first through third hot air streams pass through the first pathway L1, their temperature drops below the first reference temperature. Therefore, the outlet side of the first pathway L1 may be connected to the main boiler 35 or to the fourth pathway L4, which will be described later, allowing discharge into the internal space 111.

The second pathway L2 is provided inside the pyrolysis apparatus 100, allowing the first hot air, which has a temperature equal to or higher than a second reference temperature, which is higher than the first reference temperature, to pass through and supply heat to warm the internal space 111 of the pyrolysis apparatus 100, into which the waste W is introduced. In other words, the first hot air stream passing through the second pathway L2 supplies heat to a jacket portion 140 that forms the second pathway L2, which will be described later. The jacket portion 140 is heated and provides heat to the internal space 111 to be maintained at a third reference temperature, which is lower than the first reference temperature.

In this manner, the first hot air stream passing through the second pathway L2 indirectly supplies heat to the internal space 111.

Here, the second reference temperature may refer to a temperature of 900°C or higher. For example, if hot air of 900°C or higher passes through the second pathway L2, it may be discharged as hot air of approximately 750°C, but the present invention is not limited thereto. Also, the third reference temperature may be approximately 350°C, but the present invention is not limited thereto. The purpose of the second pathway L2 providing heat to maintain the internal space 111 of the pyrolysis apparatus 100 at the third reference temperature is to prevent the combustible gas generated in the pyrolysis apparatus 100 from cooling as it passes through the pyrolysis apparatus 100, and the second pathway L2 also provides the function of preheating the waste W introduced into the internal space **111** before pyrolysis.

The second and third hot air streams are cooled to the first reference temperature in the auxiliary boiler 60 before being discharged. Therefore, the second and third hot air streams pass through the first pathway L1, and if the second and third hot air streams have a temperature equal to or higher than the second reference temperature, the second and third hot air streams may also pass through the second pathway L2.

The inlet side of the second pathway L2 is connected to the combustion furnace 30 or the auxiliary boiler 60, where the first hot air stream is supplied. As the first hot air stream passes through the second pathway L2, its temperature drops to a level higher than the first reference temperature but lower than the second reference temperature. Therefore, the outlet side of the second pathway L2 may be connected to the auxiliary boiler 60 to reuse the heat of the first hot air stream, or may be connected to the main boiler 35 for discharge. At this time, the hot air re-supplied to the first or third pathway **L1** or L3 of the pyrolysis apparatus 100 after being cooled because of the inlet side of the second path L2 being connected to the auxiliary boiler 60 may preferably be classified as the third hot air stream.

Additionally, the first and second pathways **L1** and L2 may be provided with a first damper and a second damper, respectively, to open and close the first and second pathways **L1** and L2.

The first damper may operate to open the first pathway L1 when the temperature of the first through third hot air streams supplied to the pyrolysis apparatus 100 is at the first reference temperature, and to close the first pathway L1 when the temperature of the first through third hot air streams is not at the first reference temperature.

However, the first damper preferably operates to close the first pathway L1 even if the temperature of the first through third hot air streams supplied to the first pathway L1 is at the first reference temperature, in a case where the temperature of the first pathway L1, i.e., the temperature of the pyrolysis member 120, exceeds the first reference temperature. In other words, the first damper is controlled so that the temperature of the pyrolysis member 120 reaches the first reference temperature. To this end, the first damper may open the first pathway L1 when the first through third hot air streams at the first reference temperature are supplied.

The second damper may operate to open the second pathway L2 when the temperature of the first through third hot air streams supplied to the pyrolysis apparatus 100 is equal to or higher than the second reference temperature, and to close the second pathway L2 when the temperature of the first through third hot air streams is below the second reference temperature.

However, even if the temperature of the first through third hot air streams supplied to the second pathway L2 is equal to or higher than the second reference temperature, the second damper preferably operates to close the second pathway L2 when the temperature of the internal space 111 exceeds the third reference temperature.

The third pathway L3 may be provided adjacent to the first pathway L1 within the pyrolysis apparatus 100, allowing the first through third hot air streams, which have the first reference temperature, to pass through and provide heat to maintain the first pathway L1 at the first reference temperature. In other words, the first through third hot air streams passing through the third pathway L3 heat a hopper 150 that forms the third pathway L3, which will be described later. The heated hopper 150 may indirectly provide heat to the pyrolysis member 120, helping the pyrolysis member 120 maintain the first reference temperature.

The third pathway L3 may be opened and closed by a third damper, and the third damper may be provided on the inlet side of the third pathway L3. The third damper may open the third pathway L3 when the temperature of the first through third hot air streams supplied to the third pathway L3 is at the first reference temperature, and may close the third pathway L3 when the temperature of the first through third hot air streams is below or exceeds the first reference temperature.

Additionally, the inlet side of the third pathway L3 may be connected to the combustion furnace 30 or the auxiliary boiler 60, where the first through third hot air streams are supplied, and the outlet side of the third pathway L3 may be connected to the outlet side of the first pathway L1. Therefore, the first through third hot air streams passing through the third pathway L3 may be discharged to the main boiler 35 along with the first through third hot air streams passing through the first pathway L1 or discharged into the internal space 111 through the fourth pathway L4.

The fourth pathway L4 may be provided inside the pyrolysis apparatus 100 to connect the outlet side of the first pathway L1 or the third pathway L3 with the internal space 111. The fourth pathway L4 may supply the first through third hot air streams that have passed through the first pathway L1 or the third pathway L3 to the internal space 111. At this time, as the fourth pathway L4 discharges the first through third hot air streams into the internal space 111, the fourth pathway L4 may directly provide heat from the first through third hot air streams to the waste W.

The fourth pathway L4 may be opened and closed by a fourth damper, and the fourth damper may be provided on the inlet side of the fourth pathway L4. The fourth damper may open the fourth pathway L4 when the temperature of the first through third hot air streams supplied to the fourth pathway L4 is below the first reference temperature, and may close the fourth pathway L4 when the temperature of the first through third hot air streams is at or above the first reference temperature, or when the temperature of the internal space 111 exceeds the third reference temperature.

Additionally, during the initial operation, when the temperature of the hot air discharged from the combustion furnace 30 is at or below the first reference temperature, the hot air discharged from the combustion furnace 30 may be discharged to the first pathway L1. However, once the pyrolysis member 120 reaches the first reference temperature, the hot air discharged from the combustion furnace 30 that is below the first reference temperature may bypass the pyrolysis apparatus 100 through the second pathway L2. In other words, the hot air discharged from the combustion furnace 30 may not pass through the pyrolysis member 120 and may be discharged to the main boiler 35. This eliminates the need to install an additional duct connecting the combustion furnace 30 to the main boiler 35, simplifying the duct connection structure of the pyrolysis system.

Furthermore, the hot air discharged from the combustion furnace 30 may be supplied to the pyrolysis apparatus 100, but if the temperature of the hot air discharged from the combustion furnace 30 exceeds the first reference temperature but is below the second reference temperature, the hot air discharged from the combustion furnace 30 may preferably be supplied to the auxiliary boiler 60 without passing through the pyrolysis apparatus 100. After being cooled to the first reference temperature in the auxiliary boiler 60, the hot air discharged from the combustion furnace 30 may be supplied to the first pathway L1 or the third pathway L3 and classified as the second hot air stream.

Meanwhile, the auxiliary boiler 60 and the main boiler 35 may cool the hot air passing therethrough to obtain heat, and pyrolysis oil may be supplied to utilize this heat.

The pyrolysis oil generated in the emulsification apparatus 20 may exchange heat while passing through the auxiliary boiler 60 and the main boiler 35, and may then be discharged to a refining facility such as a refining heater 41 or a refining tower 43. As the pyrolysis oil passes through the auxiliary boiler 60 and the main boiler 35, the pyrolysis oil may be heated, thus saving the heat sources that are previously provided for heating the pyrolysis oil.

Additionally, the hot air passing through the auxiliary boiler 60 may exchange heat with water circulating in the auxiliary boiler 60 or exchange heat with the pyrolysis oil, cooling the hot air and utilizing the obtained heat.

Although not illustrated, additional dampers and various fans or pumps for controlling the flow of hot air may be installed between each pathway and the pyrolysis apparatus 100, emulsification apparatus 20, combustion furnace 30, main boiler 35, and auxiliary boiler 60.

The pyrolysis apparatus 100 will hereinafter be described in detail with reference to FIGS. 6 and 7.

The pyrolysis apparatus 100 may include the pyrolysis chamber 110 that forms the internal space 111 in which the waste W is introduced and provides a sealed environment for the pyrolysis of the waste W.

The pyrolysis chamber 110 may be formed in a cylindrical shape with the internal space 111 sealed, and an exhaust pipe (not illustrated) for discharging combustible gas may be provided on the upper side of the pyrolysis chamber 110. Additionally, the pyrolysis chamber 110 may have an upper door (not illustrated) on its upper side for introducing the waste W into the internal space 111, and an explosion-proof opening 112 for preventing explosions in case of pressure rises in the internal space 111. Furthermore, a residue discharge section may be provided on the lower side of the pyrolysis chamber 110 to discharge the residues generated during pyrolysis.

The exhaust pipe may be connected to the combustible gas transfer line 3, and the upper door may open and close an inlet formed in the pyrolysis chamber 110 for introducing the waste W. For example, the upper door may be a folding door operated by a hydraulic cylinder, but the present invention is not limited thereto. A sealing member may be provided between the upper door and the inlet to maintain the internal space 111 of the pyrolysis chamber 110 in a sealed state.

The pyrolysis chamber 110 may be provided with the pyrolysis member 120 that is disposed at the lower side of the pyrolysis chamber 110. As the waste W is layered so that the lower part of the waste W comes into contact with the pyrolysis member 120, and hot air is supplied, raising the temperature, the pyrolysis member 120 may melt and pyrolyze the lower part of the waste W.

The pyrolysis member 120 is installed inside the pyrolysis chamber 110, where it comes into contact with the waste W. When the pyrolysis member 120 is heated by hot air, the waste W in contact with the pyrolysis member 120 melts and undergoes pyrolysis, generating combustible gas. The combustible gas passes through the internal space 111 and is discharged through the exhaust pipe. The residues remaining after the pyrolysis may fall downward.

To melt and pyrolyze the waste W in contact with the pyrolysis member 120, the pyrolysis member 120 needs to reach a pre-set first reference temperature, the optimal temperature for pyrolysis. Additionally, to prevent the combustible gas generated during pyrolysis from cooling as it passes through the pyrolysis apparatus 100, the internal space 111 needs to be maintained at the third reference temperature.

Accordingly, the pyrolysis apparatus 100 may include first heating means that maintains the pyrolysis member 120 at the first reference temperature when hot air is supplied, and second heating means that surrounds the pyrolysis chamber 110 and maintains the internal space 111 at the third reference temperature when hot air is supplied.

The first heating means may be the pyrolysis member 120 or a frame part 121 included in the pyrolysis member 120 and may have the first pathway L1 inside.

The second heating means may be the jacket portion 140 that has the second pathway L2 inside and rises in temperature when hot air is supplied, or may be a hot air supply pipe 160 that forms the fourth pathway L4 and supplies hot air to the internal space 111.

Additionally, the hopper 150 that provides heat to the pyrolysis member 120 may be provided as third heating means to help the pyrolysis member 120 maintain a uniform temperature.

The pyrolysis member 120 is disposed horizontally to block the upper and lower directions of the internal space 111, supporting the layered waste W. Discharge holes 130 are formed on the pyrolysis member 120, allowing the waste W to be seated on the upper side of the pyrolysis member 120. The residues generated during pyrolysis pass through the discharge holes 130 and fall to the lower side of the pyrolysis member 120.

The pyrolysis member 120 may include the frame part 121 that supports the layered waste W, and the discharge holes 130 that are formed in the frame part 121 to allow the residues generated during the pyrolysis of the waste W to pass through and accumulate on the lower side of the pyrolysis member 120.

The frame part 121 may be hollow, allowing hot air to flow and circulate inside. The hot air is introduced through an inlet pipe 124 and discharged through an outlet pipe 125. For example, a pair of distribution pipes 122 and a plurality of connecting pipes 123 may be provided between the inlet pipe 124 and the outlet pipe 125.

The frame part 121 is illustrated as having a pair of distribution pipes 122 and a plurality of connecting pipes 123 provided between the inlet pipe 124 and the outlet pipe 125, but this structure is designed to effectively heat the frame part 121 with the hot air supplied through the inlet pipe 124 and discharged. A plurality of connecting pipes 123 alone may also be provided between the inlet pipe 124 and the outlet pipe 125, but the present invention is not limited thereto. In other words, the frame part 121 may have any shape as long as the inlet pipe 124 and the outlet pipe 125 are connected and the discharge holes 130 are provided while blocking the internal space 111.

The inlet pipe 124 may pass through the pyrolysis chamber 110 to be connected to the hot air supply line 6, and the outlet pipe 125 may pass through the pyrolysis chamber 110 to be connected to the main boiler 35.

Furthermore, the interior of the frame part 121 and the internal space 111 may be independent and not in communication with each other. However, the hot air that circulates through the frame part 121 may be supplied to the internal space 111 through the hot air supply pipe 160, which will be described later.

The pair of distribution pipes 122 may be disposed to face each other, and the inlet pipe 124 and the outlet pipe 125 may be connected to each of the pair of distribution pipes 122. The plurality of connecting pipes 123 may connect the pair of distribution pipes 122 and may be spaced apart from each other to form the discharge holes 130 in the spaces therebetween.

As described above, the distribution pipes 122 may be configured to distribute the hot air from the inlet pipe 124 to the plurality of connecting pipes 123, and to direct the hot air that passes through the plurality of connecting pipes 123 to the outlet pipe 125.

In particular, the pair of distribution pipes 122 may be formed in an arc shape to closely adhere to the inner side of the pyrolysis chamber 110. The inlet pipe 124 and the outlet pipe 125 may be connected to the parts of the distribution pipes 122 that adhere to the inner side of the pyrolysis chamber 110, and the plurality of connecting pipes 123 may be connected to the opposite parts of the distribution pipes 122.

The plurality of connecting pipes 123 may be provided as hollow rods, elongated in their longitudinal direction, with both ends connected to the pair of distribution pipes 122. The plurality of connecting pipes 123 may be spaced apart from each other in a direction perpendicular to their longitudinal direction.

Preferably, the plurality of connecting pipes 123 may be formed such that hot air may be supplied uniformly. The plurality of connecting pipes 123 may be configured with the same thickness and diameter and may be spaced apart at equal intervals. At this time, the discharge holes 130, which are formed to allow the residues remaining after pyrolysis to pass through, may preferably be configured to prevent the passage of the waste W.

Accordingly, the interiors of the inlet pipe 124, the pair of distribution pipes 122, the plurality of connecting pipes 123, and the outlet pipe 125 may be connected to form the first pathway L1.

In addition, the pyrolysis member 120 is installed at a predetermined distance from the bottom of the pyrolysis chamber 110, providing space for the residues remaining after pyrolysis to accumulate at the bottom of the pyrolysis chamber 110 and allowing the heat from the hopper 150, which is installed on the outer lower side of the pyrolysis member 120, to be transferred.

The residue discharge section provided below the pyrolysis member 120 may include the hopper 150, a lower door 170, and a scraper 180.

The hopper 150 may be formed in a cylindrical shape, having a circumference corresponding to the circumference of the bottom of the pyrolysis chamber 110. The hopper 150 may be attached to the bottom of the pyrolysis chamber 110 and include a space for receiving the residues discharged from the pyrolysis chamber 110.

The hopper 150 may have a hopper inlet pipe 151 connected thereto, allowing hot air to be supplied into the hopper 150. A hopper outlet pipe 152, which connects the hopper 150 to the outlet pipe 125 of the frame part 121, may also be provided, allowing the hot air that has passed through the hopper 150 to be discharged to the main boiler 35 or the internal space 111.

Additionally, the hopper outlet pipe 152 may be connected to the outlet pipe 125 of the frame part 121, allowing hot air to be discharged into the internal space 111.

The interior of the hopper inlet pipe 151, the interior of the hopper 150, and the interior of the hopper outlet pipe 152 may be connected to form the third pathway L3.

The lower door 170 may be installed in an opening formed at the bottom of the pyrolysis chamber 110. By opening and closing this opening, the lower door 170 may selectively open or seal the internal space 111.

A sealing member may be provided between the lower door 170 and the opening, and the lower door 170 may preferably be opened only when the pyrolysis apparatus 100 is not in operation after the pyrolysis in the pyrolysis chamber 110 is complete.

The scraper 180 may be a magnetic scraper provided to enhance the airtightness of the pyrolysis chamber 110. The scraper 180 may adhere magnetically to a magnet (not illustrated) provided on the outer side of the bottom of the pyrolysis chamber 110. When the lower door 170 is opened, the scraper 180 may rotate around its rotation axis according to the magnet and may scrape the residues deposited at the bottom of the pyrolysis chamber 110, discharging them through the opening.

Specifically, for example, the scraper 180 may be formed in a rod shape, and both ends of the scraper 180 may be formed to have a length corresponding to the inner diameter of the pyrolysis chamber 110 and may thereby be disposed either in contact with or in the proximity of the inner surface of the pyrolysis chamber 110. A rotation axis may be provided in the middle of the scraper 180, aligned with the center of the pyrolysis chamber 110. The scraper 180 may move along the magnet installed on the outside of the pyrolysis chamber 110, may rotate around the rotation axis, and may scrape the residues deposited at the bottom.

The pyrolysis chamber 110 and the pyrolysis member 120 may preferably be formed of heat-resistant steel that can withstand high temperatures of 1200°C or more, but the present invention is not limited thereto.

Additionally, the pyrolysis chamber 110 may include the jacket portion 140 formed to surround the exterior, creating a gas circulation space 141.

The jacket portion 140 may be formed to enclose the pyrolysis chamber 110 with the gas circulation space 141 interposed therebetween. The jacket portion 140 may include a jacket inlet pipe 142 that supplies hot air into the gas circulation space 141 and a jacket outlet pipe 143 that discharges the hot air circulating in the gas circulation space 141.

The gas circulation space 141 may be provided in a sealed state and may be formed to enclose the exterior of the pyrolysis chamber 110. As hot air passes through the interior and the temperature rises, the gas circulation space 141 may apply heat to the internal space 111.

The jacket inlet pipe 142 may be connected to the hot air supply line 6 and may be installed on the lower side of the pyrolysis chamber 110 to be a predetermined distance apart in an upward direction from where the inlet pipe 124 is installed. The jacket outlet pipe 143 may be connected to the main boiler 35 or the auxiliary boiler 60 and may preferably be located on the opposite side of where the jacket inlet pipe 142 is installed. The jacket outlet pipe 143 may be installed on the upper side of the pyrolysis chamber 110.

The interior of the jacket inlet pipe 142, the gas circulation space 141, and the interior of the jacket outlet pipe 143 may be connected to form the second pathway L2.

The jacket portion 140 may be formed of a refractory material, such as castable refractory, or may include a refractory member formed of refractory material on its inner surface to prevent the heat in the gas circulation space 141 from being transferred outside.

Additionally, the pyrolysis chamber 110 may include the hot air supply pipe 160 that branches off from the outlet pipe 125, is connected to the internal space 111, and discharges the hot air from the outlet pipe 125 into the internal space 111, directly supplying the hot air to the waste W.

The hot air supply pipe 160 may be installed between the outlet pipe 125 and the jacket outlet pipe 143, supplying hot air toward the middle of the internal space 111 in the vertical direction. The inlet side of the hot air supply pipe 160 may be connected to the outlet pipe 125. The hot air supply pipe 160 may be formed to extend vertically upward from its inlet side and be bent, and the outlet side of the hot air supply pipe 160 may protrude into the internal space 111 by passing through the pyrolysis chamber 110. The hot air supply pipe 160 may have one or more branch pipes that protrude into the internal space 111 between its inlet and outlet sides.

Additionally, the outlet pipe 125 may extend to the left and right from the branching point, where the hopper outlet pipe 152 branches downward, and the hot air supply pipe 160 may branch upward. A four-way valve or dampers for each pathway may be provided at the branching point to control the flow of hot air.

That is, the hot air introduced to the branching point consists of the hot air that has passed through the pyrolysis member 120 and the hot air that has passed through the hopper 150. At the branching point, the hot air may be discharged either toward the hot air supply pipe 160 or the main boiler 35.

Furthermore, in the process of pyrolyzing the waste W using the pyrolysis member 120, residues such as black carbon may adhere to the pyrolysis member 120. These residues are not discharged through the residue discharge section and require a separate removal device.

To remove the residues adhering to the pyrolysis member 120, a burner 190 may be provided. The burner 190 operates to burn off the residues on the pyrolysis member 120 when the pyrolysis apparatus 100 is not in operation after the pyrolysis in the pyrolysis chamber 110 is complete.

The burner 190 may be installed on either the upper or lower side of the pyrolysis member 120 and may operate by injecting a separate fuel.

According to the embodiments of the present invention having such shapes and structures, the pyrolysis apparatus improves the efficiency of the pyrolysis system by receiving hot air and pyrolyzing waste.

Additionally, the combustion furnace generates hot air using the non-condensable gas discharged from the emulsification apparatus and supplies it to the pyrolysis apparatus, thereby improving efficiency.

Furthermore, depending on the temperature of the hot air discharged from the combustion furnace, the hot air can be supplied to the first through fourth pathways of the pyrolysis apparatus or to the auxiliary boiler.

Moreover, the pyrolysis oil discharged from the emulsification apparatus passes through the auxiliary boiler and the main boiler, allowing the use of waste heat generated in the auxiliary and main boilers.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A pyrolysis apparatus for waste, comprising:
a pyrolysis chamber that provides a sealed internal space and in which introduced waste is layered;
a pyrolysis member provided on a lower side of the pyrolysis chamber and contacting a lower part of the layered waste to pyrolyze the waste;
an exhaust pipe provided on one side of the pyrolysis chamber to discharge combustible gas generated during the pyrolysis of the waste; and
a residue discharge section provided on a lower side of the pyrolysis member to discharge residues remaining after the pyrolysis of the waste,
wherein the pyrolysis member is heated by hot air supplied from the outside, melting and pyrolyzing the waste that comes in contact with the pyrolysis member.

2. The pyrolysis apparatus of claim **1,** wherein the pyrolysis member includes: a frame part formed to block a lower part of the internal space of the pyrolysis chamber, on which the waste is layered; and discharge holes formed in the frame part so that the residues generated during the pyrolysis of the waste accumulate on the lower side of the pyrolysis member.

3. The pyrolysis apparatus of claim 2, wherein the frame part is formed in a hollow shape to allow the hot air to be introduced and circulated inside.

4. The pyrolysis apparatus of claim 3, wherein the frame part includes: a pair of distribution pipes formed in an arc shape to closely adhere to an inner side of the pyrolysis chamber and disposed to face each other, and having connected thereto an inlet pipe for introducing the hot air and an outlet pipe for discharging the hot air; and a plurality of connecting pipes connecting the pair of distribution pipes, spaced apart from each other, and forming the discharge holes.

5. The pyrolysis apparatus of claim 4, wherein
the pyrolysis chamber includes a hot air supply pipe that branches off from the outlet pipe, is connected to the internal space, discharges the hot air from the outlet pipe into the internal space, and directly supplies the hot air to the waste, and
the hot air circulating through the pyrolysis member is discharged to the main boiler or discharged into the internal space through the hot air supply pipe.

6. The pyrolysis apparatus of claim 1, further comprising:
first heating means provided in the pyrolysis member and supplying hot air to the pyrolysis member to provide heat to the pyrolysis member so that the pyrolysis member maintains a preset first reference temperature; and
second heating means provided to surround the pyrolysis chamber and transferring heat to the internal space for the internal space to maintain a temperature lower than the first reference temperature when hot air is supplied inside and a temperature rises.

7. The pyrolysis apparatus of claim 1, wherein the pyrolysis chamber includes a jacket portion that is formed to surround the exterior, with a sealed gas circulation space provided between the jacket portion and the exterior.

8. The pyrolysis apparatus of claim 7, wherein
at the preset first reference temperature, the hot air is supplied to the pyrolysis member, and
at a temperature higher or lower than the first reference temperature, the hot air is supplied to the jacket portion.

9. The pyrolysis apparatus of claim 7, wherein the jacket portion is formed of a refractory material or includes a refractory member formed of a refractory material on its inner surface.

10. The pyrolysis apparatus of claim **1,** wherein the pyrolysis member is installed at a predetermined distance from a bottom of the pyrolysis chamber.

11. The pyrolysis apparatus of claim 10, wherein the residue discharge section includes: a lower door installed at the bottom of the pyrolysis chamber to selectively open or seal the internal space; and a scraper that adheres magnetically to a magnet provided on an outer side of the bottom of the pyrolysis chamber, and rotates around a rotation axis according to the magnet when the lower door is opened, scraping the residues deposited at the bottom of the pyrolysis chamber.

12. The pyrolysis apparatus of claim **11,** wherein the residue discharge section includes a hopper attached to the bottom of the pyrolysis chamber to receive the residues discharged through the lower door, and having hot air supplied inside to transfer heat to the pyrolysis member when a temperature rises.

13. A pyrolysis system for waste, comprising:
a pyrolysis apparatus receiving waste and generating combustible gas by pyrolyzing the received waste;
an emulsification apparatus connected to the pyrolysis apparatus, producing pyrolysis oil by cooling condensable gas among the combustible gas generated in the pyrolysis apparatus, and discharging non-condensable gas; and
a combustion furnace connected to the emulsification apparatus and receiving and combusting the non-condensable gas discharged from the emulsification apparatus,
wherein the combustion furnace generates hot air using combustion heat generated by combusting the non-condensable gas and supplies the hot air to the pyrolysis apparatus, and
as a temperature of the pyrolysis apparatus is elevated by the hot air provided from the combustion furnace, the waste melts at the elevated temperature upon contact with the pyrolysis apparatus, and is thereby pyrolyzed.

14. The pyrolysis system of claim 13, wherein
during an initial operation, the combustion furnace generates the hot air using a supplied fuel, and
when the non-condensable gas is discharged from the emulsification apparatus, the combustion furnace generates the hot air by combusting the non-condensable gas.

15. The pyrolysis system of claim 13, further comprising:
a main boiler generating steam by recovering the hot air discharged from the pyrolysis apparatus, or releasing the hot air discharged from the pyrolysis apparatus to a pollution prevention facility; and
an auxiliary boiler recovering and cooling the hot air discharged from the combustion furnace or discharged after heating the pyrolysis apparatus, and supplies the hot air to the pyrolysis apparatus.

16. The pyrolysis system of claim 15, wherein
when a temperature of the hot air discharged from the combustion furnace is below a preset first reference temperature during the initial operation, the hot air discharged from the combustion furnace is supplied to the pyrolysis apparatus, and
when the temperature of the hot air discharged from the combustion furnace is higher than the first reference temperature, the hot air discharged from the combustion furnace is supplied to the auxiliary boiler, cooled to the first reference temperature, and then supplied to the pyrolysis apparatus.

17. The pyrolysis system of claim 15, wherein when a temperature of the hot air is higher than a preset first reference temperature, the auxiliary boiler recovers the hot air discharged after heating the pyrolysis apparatus, cools the recovered hot air to the first reference temperature, and then re-supplies the cooled hot air to the pyrolysis apparatus.

18. The pyrolysis system of claim 15, wherein the hot air includes: a first hot air stream generated and discharged from the combustion furnace and supplied to the pyrolysis apparatus; a second hot air stream generated and discharged from the combustion furnace, cooled in the auxiliary boiler, and then supplied to the pyrolysis apparatus; and a third hot air stream passing through the pyrolysis apparatus, cooled in the auxiliary boiler, and then supplied to the pyrolysis apparatus.

19. The pyrolysis system of claim 18, wherein the pyrolysis apparatus includes: a first pathway through which the first through third hot air streams having the preset first reference temperature pass to supply heat for pyrolyzing the waste; and a second pathway through which the first hot air stream having a temperature equal to or higher than a second reference temperature, which is higher than the first reference temperature, passes, and which is for supplying heat to an internal space into which the waste is introduced to maintain the internal space at a third reference temperature, which is lower than the first reference temperature.

20. The pyrolysis system of claim 15, wherein
the pyrolysis oil generated in the emulsification apparatus passes through the auxiliary boiler for heat exchange, passes through the main boiler for heat exchange, and is discharged to a refining facility, and
the hot air passing through the auxiliary boiler exchanges heat with water circulating in the auxiliary boiler or with the pyrolysis oil.
